# EUROPEAN PATENT APPLICATION

(11) **EP 3 053 815 A1**
(43) Date of publication of application: **10.08.2016**
(21) Application number: 16000215.0
(22) Date of filing: 29.01.2016
(51) Int. Cl.: B62J 17/08

(54) **IMPROVED COVER FOR PROTECTING A BICYCLE AND A CYCLIST FROM RAIN**

(30) Priority: 06.02.2015 IT VE20150005
(71) Applicant: Coldel, Pietro, 30172 Mestre Venezia (VE) (IT)
(72) Inventor: Coldel, Pietro, 30172 Mestre Venezia (VE) (IT)
(74) Representative: Baldissera, Marco Felice

(57) **Abstract**

An improved cover (10) for protecting a bicycle (12) and a cyclist from rain, comprising a support structure (14) and a transparent protective sheet (5), said structure (14) comprises elastically flexible telescopic rods (3) that are associated with corresponding seats (4) intended to be hooked to the frame (16) of the bicycle (12) and pins (1) intended to be attached to the handlebar (18) of the bicycle (12) wherein according to an operative configuration of the cover (10), said telescopic rods (3) are extracted so that one of their ends (22) comes out from said seats (4), thereby defining an arcuate portion which extends towards the front area of the bicycle (12), and said extracted ends (22) of the telescopic rods (3) is connected by elastic tensioners means (2) to said pins (1) so as to define a support for said protective sheet (5).

## Description

The present invention refers to an improved cover for protecting a bicycle and cyclist in case of rain.

Covers applied on the frame of a bicycle and suitable for protecting the cyclist from the sun and rain are known. The operation of mounting the removable structure requires the presence of a rigid windshield; moreover, the structure of the rods has fixed ends and is composed of numerous elements that must be assembled and fastened on the bicycle before being able to mount the sheet, and must then be stored in an appropriate custody at the end of their use. Moreover, the cover sheet extends horizontally above the cyclist's head (as in an umbrella) and is ineffective in case of a lateral rain.

The scope of the present invention is to propose a cover for protecting a bicycle and cyclist in case of rain, without hindering the driving maneuvers on the road and so as to integrally protect the cyclist.

All these purposes and others that will be manifest from the description to follow are achieved, according to the invention, by an improved cover having the features indicated in claim 1.

The present invention is in the following further explained in some of its preferred embodiments, according to a purely exemplifying and non limiting purpose, with reference to the attached drawings, wherein:

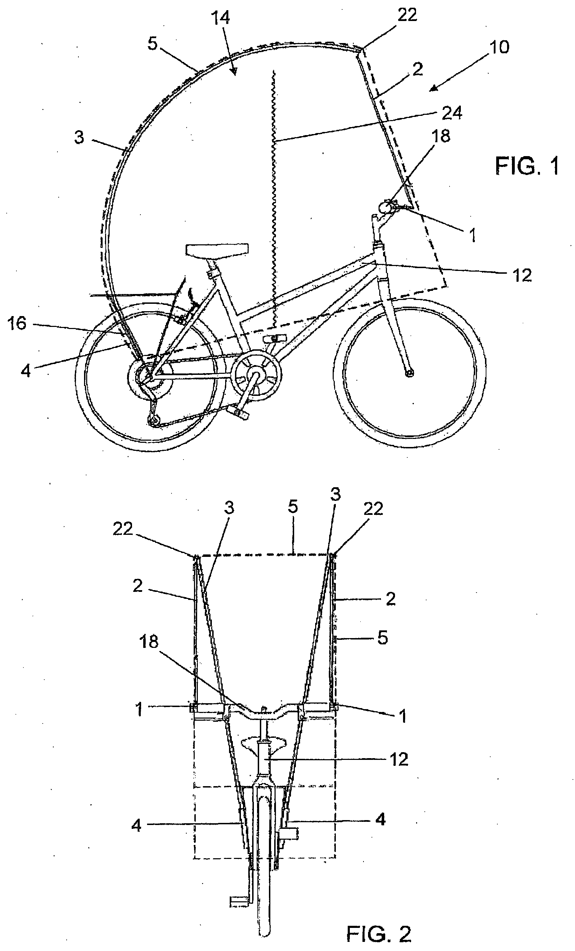

- Figure 1 shows a lateral view of the cover, according to the invention,
- Figure 2 shows it in a frontal view,
- Figure 3 shows it in a ground view,
- Figure 4 shows a detail of the cover, according to the invention, with reference to the seats for the telescopic rods in a lateral view,
- Figure 5 shows the same detail of Fig. 4 in a ground view,
- Figure 6 shows a detail of the cover, according to the invention, with reference to the pins fastened to the handlebar of the bicycle in a lateral view,
- Figure 7 shows the same detail of Fig. 6 in a ground view.

As seen in the drawings, the improved cover 10 for protecting the bicycle 12 and the cyclist (not shown) in case of rain comprises a supporting structure, marked as a whole with the reference number 14, for a transparent protective sheet 5 made of PVC.

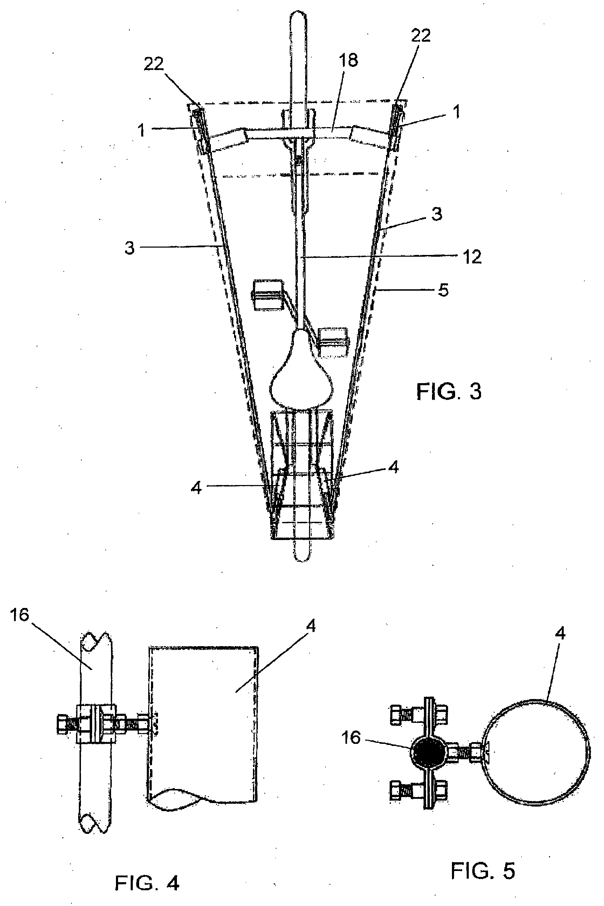

In particular, this structure 14 comprises elastically flexible telescopic rods 3 associated to seats 4 that are permanently fastened to the frame of the bicycle 12. More in detail, these seats are constituted of a tubular support that is fastened/anchored to the upright of the luggage rack 16 or to the fender of the bicycle 12 (see in particular Fig. 4 and 5).

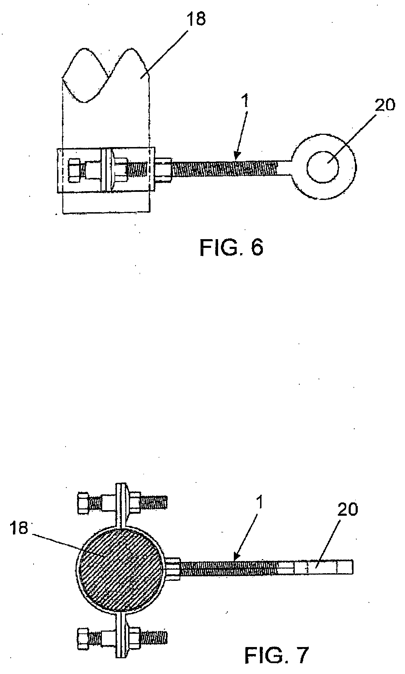

The structure 14 further comprises pins 1 destined to be permanently attached to the handlebar 18 of the bicycle 12. In particular, each pin 1 is constituted of a body that is fastened to the handlebar 18 and fitted with a hole 20 for attaching elastic tensioning means 2 (see in particular Fig. 6 and 7).

According to a first non-operative configuration (not shown) of the cover 10, to be used in the absence of rain, the telescopic rods 3 are retracted inside their corresponding seats 4.

In an operative configuration of the cover 10, to be used in case of rain, the telescopic rods are extended and lengthened so that one of their extremities 22 projects from the corresponding seat 4. In particular and thanks to their elasticity, the extended rods are curved so as to define an arcuate portion that extends toward the frontal area of the bicycle 12 until hooking up there, at their extremities 22, with elastic tensioning means 2. More in detail, the extremities 22 of the telescopic rods 3 also present a hole for hooking up said elastic tensioning means 2.

The elastic telescopic rods 3 are easily extractable (with a single motion of the cyclist's arm) from their seats 4, and later automatically retractable inside the same seats.

The protective sheet 5 appropriately comprises portions for a frontal, rear and lateral protection of the cyclist. In particular, the fact that the protective sheet 5 presents lateral portions allows stabilizing the structure while acting against the wind.

The protective sheet 5 preferably comprises an opening closable with a hinge 24 and can also have holes (not shown) for aerating the internal space delimited by the protective sheet when the cover is in an operative configuration.

It is evident from the above that the cover, according to the invention, is more advantageous than the traditional kinds, in that:
- The protective sheet and the components of the supporting structure are constituted of a few simple elements with a low production cost,
- There is no fixed coupling between the elements, and this facilitates and speeds-up the transition of the cover from a non operative to an operative configuration,
- When it is in its non operative configuration, the cover itself provides no hindrance to the cyclist's ride,
- When it is in its operative configuration, it is flexible in a curve, which derives in particular from the elasticity of the telescopic rods and the absence of rigid elements,
- It does not comprise a rigid windshield, which is instead replaced by two elastic tensioning means on which the protective sheet rests, nor other rigid structural elements to be assembled to support the sheet itself
- The protective sheet offers an integral protection that protects the cyclist frontally, rear and laterally, while creating an enclosure that is perfectly protected from the weather and easily accessible through an opening closable with a hinge.

This invention has been illustrated and described in one of its preferred embodiments, but it is understood that in practice other executive variants may be applied to the same, without thereby exiting from the realm of protection of this patent for an industrial invention.

## Claims

1. An improved cover (10) for protecting the bicycle (12) and the cyclist from rain **characterized in that** it comprises a support structure (14) for a transparent protective sheet (5), said structure comprises
- elastically flexible telescopic rods (3) that are associated with corresponding seats (4) intended to be hooked to the frame (16) of the bicycle (12),
- pins (1) intended to be attached to the handlebar (18) of the bicycle (12),
and **characterized in that** it is provided a first non-operative configuration, in which said telescopic rods (3) are retracted inside the corresponding seats (4), and an operative configuration, to be used in case of rain, in which:
- said telescopic rods (3) are extracted so that one of their ends (22) comes out from said seats (4) thereby defining an arcuate portion which extends towards the front area of the bicycle (12), and
- said extracted ends (22) of the telescopic rods (3) is connected by elastic tensioners means (2) to said pins (1) so as to define a support for said protective sheet (5).

2. Cover, according to claim 1, **characterized in that** said seats (4) for said telescopic rods (3) comprise tubular supports fixed to the upright of the fenders or of the luggage rack (16) of the bicycle (12).

3. Cover, according to one or more of the preceding claims, **characterized in that** the extracted ends (22) of said telescopic rods (3) comprise a hole for the attachment of said elastic tensioners means (2).

4. Cover, according to one or more of the preceding claims, **characterized in that** each of said pins (1) comprises a body which is fixed to the handlebar (18) and which is provided with a hole (20) for the engagement of said elastic tensioners means (2).

5. Cover, according to one or more of the preceding claims, **characterized in that** said protective sheet (5) comprises portions for protecting the cyclist frontally, rear and laterally.

6. Cover, according to one or more of the preceding claims, **characterized in that** said protective sheet (5) comprises an opening closable with a hinge (24).

7. Cover, according to one or more of the preceding claims, **characterized in that** said protective sheet (5) comprises holes for aeration of the interior space which is delimited by the protective sheet itself when the cover is in its operative configuration.
